# EUROPÄISCHE PATENTANMELDUNG

(11) **EP 3 323 843 A1**
(43) Veröffentlichungstag der Anmeldung: **23.05.2018**
(21) Anmeldenummer: 16199906.5
(22) Anmeldetag: 22.11.2016
(51) Int. Cl.: C08G 18/48, C08G 18/66, C08G 18/76, C08G 18/24, C08G 18/32, C08L 63/00, C08L 75/08, C08G 59/40

(54) **HÄRTBARES EPOXID/POLYURETHAN HYBRIDHARZSYSTEM FÜR SMCS**

(71) Anmelder: Henkel AG & Co. KGaA, 40589 Düsseldorf (DE)
(72) Erfinder: HOLTGREWE, Christian, 40225 Düsseldorf (DE); KÜSTER, Harald, 40625 Düsseldorf (DE); SUMSER, Markus, 44625 Herne (DE); ZHAO, Ligang, 40593 Düsseldorf (DE)

(57) **Zusammenfassung**

Die vorliegende Erfindung betrifft ein härtbares Epoxid/Polyurethan Hybridharzsystem, das ein Epoxidharz, ein Polyurethan und einen latenten Härter für das Epoxidharz enthält und eine Viskosität aufweist, welche das Hybridharzsystem für Anwendungen im SMC(sheet molding compound)-Bereich geeignet macht. Des Weiteren betrifft die Erfindung die Verwendung derartiger Harzsysteme für SMC Anwendungen, Verfahren zur Herstellung von Faserverbundwerkstoffen unter Verwendung der beschriebenen Harzsysteme sowie die derart erhaltenen Faserverbundwerkstoffe und Bau- und Formteile.

## Beschreibung

Die vorliegende Erfindung betrifft ein härtbares Epoxid/Polyurethan Hybridharzsystem, das ein Epoxidharz, ein Polyurethan und einen latenten Härter für das Epoxidharz enthält und eine Viskosität aufweist, welche das Hybridharzsystem für Anwendungen im SMC(sheet molding compound)-Bereich geeignet macht. Des Weiteren betrifft die Erfindung die Verwendung derartiger Harzsysteme für SMC Anwendungen, Verfahren zur Herstellung von Faserverbundwerkstoffen unter Verwendung der beschriebenen Harzsysteme sowie die derart erhaltenen Faserverbundwerkstoffe und Bau- und Formteile.

Sheet Molding Compounds (SMCs) sind Faser-Matrix-Halbzeuge, die als plattenförmige, teigartige Pressmassen aus duroplastischen Reaktionsharzen und Glasfasern hergestellt werden. In SMCs liegen alle nötigen Komponenten vollständig vorgemischt, fertig zur Verarbeitung vor. In der Regel werden Polyester- oder Vinylesterharze in Kombination mit Füllstoffen verwendet. Die Verstärkungsfasern liegen typischerweise als Schnittfasern, seltener in Matten- oder Gewebeform, vor.

Durch das vollautomatische Mischen des Harzfüllstoffgemisches mit den Glasfasern entsteht das SMC-Halbzeug in Folienform. Dieses lässt sich dann zuschneiden und mittels Fließpressen zum fertigen Bauteil weiter verarbeiten. SMC dient der Herstellung von Karosserieteilen für PKW, Sportgeräten, Teilen für die Elektro-, Sanitär- und die Luft- und Raumfahrtindustrie. Beim Pressen können in einem Arbeitsschritt komplexe Formen gefüllt und bereits Befestigungselemente in die Pressform eingelegt werden. Dies macht SMC besonders wirtschaftlich. Die Füllstoffe dienen primär der Kostenreduktion, je nach Füllstoff auch der Gewichtsreduktion oder der Veränderung anderer physikalischer Eigenschaften.

Aufgrund ihrer überlegenen Festigkeit und Widerstandsfähigkeit im Vergleich zu klassischen ungesättigten Harzen wären Epoxidharze als duroplastische Massen für SMC Anwendungen besonders wünschenswert. Zurzeit ist es allerdings nicht möglich Epoxidharze einzusetzen, weil sie bei den beim Pressen herrschenden Temperaturen zu niedrige Viskositäten aufweisen. Für den SMC Prozess sind spezielle Viskositätsprofile erforderlich. So müssen die verwendeten Harze sowohl bei Raumtemperatur als auch bei der Presstemperatur von 150-160°C hohe Viskositäten aufweisen, um eingesetzt werden zu können und die Leistungsanforderungen der derart hergestellten Teile zu erfüllen. Auch teilgehärtete Epoxidharze, sogenannte B-Zustand Harze, die beispielsweise mit einem Aminhärter vorgehärtet wurden, weisen derzeit keine geeigneten Viskositäten auf. Zusätzlich stellt sich das Problem, dass derartige teilgehärteten Harze meist gekühlt gelagert werden müssen.

Die vorliegende Erfindung überwindet die bekannten Nachteile von Epoxidharzzusammensetzungen und basiert auf der Erkenntnis der Erfinder, dass die Eignung von Epoxidharzen für SMC Anwendungen durch den Einsatz von Hybridharzsystemen, die zusätzlich zu dem Epoxidharz ein Polyurethan enthalten, überwunden werden kann. Derartige Hybridharze zeigen ähnliche Viskositätskurven wie klassische SMC-Harze. Zusätzlich wird die Stabilität durch den Zusatz von Polyurethanen nicht signifikant verringert.

Die vorliegende Erfindung betrifft daher in einem ersten Aspekt ein härtbares Epoxid/Polyurethan Hybridharzsystem für SMC (sheet moulding compound), dadurch gekennzeichnet, dass das Hybridharzsystem umfasst:
(1) mindestens ein Epoxidharz,
(2) mindestens ein Polyurethan; wobei das mindestens eine Polyurethan erhältlich ist durch das Umsetzen einer Reaktionsmischung enthaltend:
   (a) mindestens ein Polyisocyanat;
   (b) mindestens ein Polyol, insbesondere mindestens ein Triol; und
   (c) mindestens ein Katalysator für die Polyurethansynthese; und
(3) mindestens einen latenten Härter für das Epoxidharz;
wobei das Hybridharzsystem bei einer Temperatur von 150°C eine Viskosität von mindestens 100 Pas, vorzugsweise mindestens 500 Pas aufweist.

Die vorliegende Erfindung betrifft in einem weiteren Aspekt die Verwendung der hierin beschriebenen Harzsysteme als Matrixharz in SMCs bzw. zur Herstellung von SMCs sowie die Faserverbundwerkstoffe und faserverstärkten Bau- und Formteile, die unter Verwendung der hierin beschriebenen Harzsysteme hergestellt werden, und entsprechende Herstellungsverfahren.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen Zusammensetzungen bezieht sich diese Angabe nicht auf die absolute Menge an Molekülen, sondern auf die Art des Bestandteils. "Mindestens ein Polyol" bedeutet daher beispielsweise ein oder mehrere verschiedene Polyole, d.h. eine oder mehrere verschiedene Arten von Polyolen. Zusammen mit Mengenangaben beziehen sich die Mengenangaben auf die Gesamtmenge der entsprechend bezeichneten Art von Bestandteil, wie bereits oben definiert.

"Flüssig", wie hierin verwendet, bezeichnet bei Raumtemperatur (20°C) und Normaldruck (1013 mbar) fließfähige Zusammensetzungen. Dementsprechend bedeutet "fest", bei Raumtemperatur (20°C) und Normaldruck (1013 mbar) feste Zusammensetzungen.

Die Viskosität der hierin beschriebenen Harzsysteme ist bei den in SMC Verfahren eingesetzten Temperaturen, d.h. im Bereich von 150 bis 160°C, hoch genug, dass die Zusammensetzungen in den Pressen einsetzbar sind, nicht aus den Formen laufen und gleichzeitig Fasermaterialien, wie sie für faserverstärkte Kunststoffteile verwendet werden, benetzen und imprägnieren zu können. In verschiedenen Ausführungsformen hat das Reaktionsgemisch bei einer Temperatur von 150°C eine Viskosität von mindestens 100 Pas, vorzugsweise mindestens 500 Pas. Zur Bestimmung der Viskosität wird die Harzmischung bei Raumtemperatur mit einem geeigneten Mischer hergestellt und das Gemisch für 1h bei 80 °C im Umluftofen vorgehärtet. Anschließend wird die temperaturabhängige Viskosität mittels Platte/Platte-Rheometer bei einer Heizrate von 10 K/s im Bereich von 20 bis 200°C in Oszillation mit 100 rad/s bei einer Deformation von 1% bestimmt.

In einer bevorzugten Ausführungsform weist das Hybridharzsystem für SMC direkt nach dem Mischen ohne Vorhärtung der Komponenten bei 20 °C eine Viskosität (gemessen mittels Platte/Platte-Rheometer in Oszillation mit 100 rad/s) zwischen 5 und 50 Pas, vorzugsweise zwischen 10 und 40 Pas auf. Eine entsprechende Viskosität ist insbesondere vorteilhaft für eine hervorragende Benetzung der Fasern bei gleichzeitiger Standfestigkeit des Systems.

Das Epoxidharz kann Epoxidgruppen-haltige Monomere, Präpolymere und Polymere sowie Gemische der vorgenannten umfassen und wird im Folgenden auch als Epoxid bzw. Epoxidgruppen-haltiges Harz bezeichnet. Grundsätzlich umfassen derartige Epoxidharze gesättigte, ungesättigte, cyclische oder acyclische, aliphatische, alicyclische, aromatische oder heterocyclische Polyepoxidverbindungen. "Epoxidgruppen", wie hierin verwendet, bezieht sich auf 1,2-Epoxidgruppen (Oxirane). Geeignete Epoxidgruppen-haltige Harze sind insbesondere Harze mit 1 bis 10, bevorzugt 2 bis 10 Epoxidgruppen pro Molekül.

Die hierin verwendbaren Epoxidharze können variieren und schließen konventionelle und kommerziell erhältlich Epoxidharze, die jeweils individuell oder in Kombination von zwei oder mehr verschiedenen Epoxidharzen eingesetzt werden können, ein. Bei der Auswahl der Epoxidharze spielen nicht nur die Eigenschaften des Endprodukts, sondern auch die Eigenschaften des Epoxidharzes, wie zum Beispiel die Viskosität und andere Eigenschaften, die die Verarbeitbarkeit beeinflussen, eine Rolle.

Das Epoxidgruppen-haltige Harz ist vorzugsweise eine aromatische, insbesondere auch flüssige Epoxidverbindung. Beispiele für geeignete Harze schließen ein, ohne darauf beschränkt zu sein, (Poly)Glycidylether, die üblicherweise durch Umsetzung von Epichlorhydrin oder Epibromhydrin mit Polyphenolen in Gegenwart von Alkali erhalten werden oder auch (Poly)Glycidylether von Phenol-Formaldehyd-Novolak-Harzen, alkylsubstituierte Phenol-Formaldehydharze (Epoxy-Novolak-Harze), Phenol-Hydroxybenzaldehyd-Harze, Cresol-Hydroxybenzaldehyd-Harze, Dicyclopentadien-Phenol-Harze und Dicyclopentadien-substituierte Phenol-Harze. Für diesen Zweck geeignete Polyphenole sind beispielsweise Resorcin, Brenzkatechin, Hydrochinon, Bisphenol A (2,2-Bis(4-hydroxyphenyl)propan), Bisphenol F (Bis(4-hydroxyphenyl)methan), 1,1-Bis(4-hydroxyphenyl)isobutan, 4,4-Dihydroxybenzophenon, 1,1-Bis(4-hydroxyphenyl)ethan und 1,5-Hydroxynaphthalin. Ebenfalls geeignet sind Diglycidylether von ethoxyliertem Resorcin (DGER), Diglcydidylether von Resorcin, Brenzkatechin, Hydrochinon, Bisphenol, Bisphenol A, Bisphenol AP (1,1-Bis(4-hydroxyphenyl)-1-Phenylethan), Bisphenol F, Bisphenol K, Bisphenol S, und Tetramethylbiphenol.

Weitere geeignete Epoxidharze sind im Stand der Technik bekannt und können beispielsweise Lee H. & Neville, K., Handbook of Epoxy Resins, McGraw-Hill Book Company, Neuauflage von 1982 entnommen werden.

Besonders bevorzugte Epoxidgruppen-haltige Verbindungen sind aromatische Glycidylether, insbesondere Diglycidylether, ganz besonders bevorzugt solche auf Basis von aromatischen Glycidylether-Monomeren. Beispiele dafür sind, ohne Einschränkung, Di- oder Polyglycidylether von polyhydrischen Phenolen, die durch Umsetzen eines polyhydrischen Phenols mit einem Überschuss an Chlorhydrin, wie z.B. Epichlorohydrin, erhalten werden können. Solche polyhydrischen Phenole schließen Resorcinol, Bis(4-hydroxyphenyl)methan (Bisphenol F), 2,2-bis(4-Hydroxyphenyl)propan (Bisphenol A), 2,2-bis(4'-Hydroxy-3',5'-dibromophenyl)propan, 1,1,2,2-tetrakis(4'-Hydroxy-phenyl)ethan oder Kondensate von Phenolen mit Formaldehyd, die unter sauren Bedingungen erhalten werden, wie Phenolnovolake und Cresolnovolake, ein.

Diglycidylether von Bisphenol A sind beispielsweise als DER 331 (flüssiges Bisphenol A Epoxidharz) und DER 332 (Diglycidylether von Bisphenol A) von Dow Chemical Company, Midland, Michigan, erhältlich. Obwohl nicht speziell erwähnt, können auch andere Epoxidharze, die unter den Handelsnamen DER und DEN von Dow Chemical Company erhältlich sind, verwendet werden.

Es kann erfindungsgemäß bevorzugt sein, dass das verwendete Epoxidharz im Wesentlichen frei von Hydroxylgruppen ist. Im Wesentlichen frei von Hydroxylgruppen sind Epoxidharze, wenn sie ein Hydroxyäquivalenzgewicht von mindestens 4000g/eq aufweisen, wie beispielsweise das unter der Handelsbezeichnung DER 332 vertriebene Produkt.

Das Epoxid-Äquivalent geeigneter Polyepoxide kann zwischen 150 und 50000, vorzugsweise zwischen 150 und 5000, variieren. Beispielsweise ist ein Epoxidharz auf Basis Epichlorhydrin/Bisphenol-A geeignet, das ein Epoxid-Äquivalenzgewicht von 150 bis 550 g/eq aufweist.

In bevorzugten Ausführungsformen, ist das Epoxidharz ein Epoxid-Präpolymer. Vorteilhafterweise handelt es sich hierbei nicht um ein mit Aminhärtern teilgehärtetes Epoxidharz. Derartige teilgehärtete Epoxidharze werden auch als B-Zustand Epoxidharze bezeichnet. "Teilgehärtet", wie in diesem Kontext verwendet, bedeutet, dass das Harz bereits teilweise mit Aminhärtern gehärtet ist, d.h. das bereits ein Teil der Epoxidgruppen der als Ausgangsverbindungen verwendeten Komponenten, beispielsweise Monomere, durch Amine vernetzt wurde. Entsprechende Aminhärter sind im Stand der Technik bekannt und umfassen zum Beispiel aliphatische Polyamine, wie Diethylentriamin. Insbesondere ist das Hybirdmatrixsystem im Wesentlichen frei von mit Aminhärtern teilgehärtete Epoxidharzen. Dies wirkt sich insbesondere positiv auf die Lagerstabilität aus. Unter dem Begriff "im Wesentlichen frei von" wird in diesem Zusammenhang verstanden, wenn das Hybridharzsystem bezogen auf das Gesamtgewicht weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthält.

Das Polyisocyanat enthält zwei oder mehr Isocyanatgruppen und schließt jedes bekannte und für den erfindungsgemäßen Zweck geeignete Isocyanat ein und wird im Folgenden auch teilweise als Isocyanat bzw. Isocyanatgruppen-haltiges Harz bezeichnet.

Als Polyisocyanate in der Polyisocyanatkomponente sind Isocyanate mit zwei oder mehr Isocyanatgruppen geeignet. Vorzugsweise enthalten die Polyisocyanate 2 bis 10, vorzugsweise 2 bis 5, bevorzugt 2 bis 4, insbesondere 2 Isocyanatgruppen pro Molekül. Die Verwendung von Isocyanaten mit einer Funktionalität von mehr als zwei, kann unter Umständen vorteilhaft sein, da derartige Polyisocyanate als Vernetzer geeignet sind. Besonders bevorzugt sind daher Gemische von Verbindungen mit 2 oder mehr Isocyanatgruppen, wie beispielsweise Oligomerenmischungen.

Beispiele für geeignete Polyisocyanate sind 1,5-Naphthylendiisocyanat, 2,4'-, 2,2'- oder 4,4'-Diphenylmethandiisocyanat (MDI), hydriertes MDI (H12MDI), Allophanate des MDI, Xylylendiisocyanat (XDI), m- und p-Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanato-ethylester, Trimethylhexamethylendiisocyanat, 1,4-Diisocyanatobutan, 1,12-Diisocyanatododecan und Dimerfettsäurediisocyanat, sowie aliphatische Isocyanate wie Hexamethylendiisocynat, Undecandiisocyanat, Dodecamethylendiisocyanat, 2,2,4-Trimethylhexan-2,3,3-Trimethyl-hexamethylen, 1,3- oder 1,4-Cyclohexandiisocyanat, 1,3-oder 1,4-Tetramethylxyloldiisocyanat, Isophorondiisocyanat, 4,4-Dicyclohexylmethandiisocyanat oder Lysinesterdiisocyanat.

Als das mindestens eine Polyisocyanat wird vorzugsweise ein aromatisches Polyisocyanat eingesetzt. In einem aromatischen Polyisocyanat sind die NCO-Gruppen an aromatischen Kohlenstoffatomen gebunden.

Besonders bevorzugt sind die Derivate sowie Oligomeren des 2,2'-, 2,4- und/oder 4,4'-Diphenylmethandiisocyanats sowie 2,4- oder 2,6-Toluylendiisocyanat (TDI), Di- und Tetraalkyldiphenylmethandiisocyanat, 3,3'-Dimethyl-diphenyl-4,4'-diisocyanat (TODI) 1,3-Phenylendiisocyanat, 1,4-Phenylendiisocyanat und 4,4'-Dibenzyldiisocyanat.

Difunktionelle Isocyanate sind bevorzugt. Trifunktionelle Isocyanate können jedoch zumindest anteilig mit verwendet werden. Als trifunktionelle Isocyanate geeignet sind Isocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen.

Dementsprechend kann die Polyisocyanatkomponente auch Anteile von niedermolekularen Präpolymeren enthalten, beispielsweise Umsetzungsprodukte von MDI oder TDI mit niedermolekularen Diolen oder Triolen wie z.B. Ethylenglykol, Diethyenglykol, Propylenglykol, Dipropylenglykol, Triethylenglykol, Glyzerin oder Trimethylolpropan. Diese Präpolymere können durch Umsetzung eines Überschusses von monomerem Polyisocyanat in Gegenwart von Diolen der Triolen hergestellt werden. Dabei liegt das zahlenmittlere Molekulargewicht der Diole und Triole im Allgemeinen unterhalb von 1000 g/mol. Gegebenenfalls kann das Umsetzungsprodukt durch Destillation von monomeren aromatischen Isocyanaten befreit werden.

Vorzugsweise weist das mindestens eine Polyisocyanat einen NCO-Gehalt von mehr als 25 Gew.-%, weiter bevorzugt mehr als 28 Gew.-%, besonders bevorzugt mehr als 30 Gew.-%, insbesondere bevorzugt von 30 bis 50 Gew.-%, bezogen auf das mindestens eine Polyisocyanat, auf. Der Massenanteil bezieht sich bei Verwendung nur eines Polyisocyanats auf die eingesetzte Menge dieses Polyisocyanats, bei Verwendung einer Mischung von Polyisocyanaten dagegen auf die eingesetzte Menge der Mischung dieser Polyisocyanate.

Vorzugsweise hat das mindestens eine Polyisocyanat eine Viskosität von weniger als 80 mPas, insbesondere von 30 bis 60 mPas (DIN ISO 2555, Brookfield-Viskosimeter RVT, Spindel Nr. 3, 25°C; 50 UpM).

Es ist insbesondere bevorzugt, dass das mindestens eine Polyisocyanat ein zahlenmittleres Molekulargewicht von weniger als 1500 g/mol, besonders bevorzugt weniger als 1000 g/mol aufweist.

Ganz besonders geeignete Isocyanatgruppen-haltige Harze sind Methylendiphenyldiisocyanat (MDI), Toluol-2,4-diisocyanat (TDI), polymeres Diphenylmethandiisocyanat (PMDI) und Mischungen der vorgenannten. Diese Polyisocyanate sind beispielsweise unter dem Markennamen Desmodur® von Bayer AG (DE) im Handel erhältlich.

Ferner wird mindestens ein Polyol, insbesondere mindestens ein Triol eingesetzt. "Polyole", wie hierin verwendet, bezieht sich auf Verbindungen, die mindestens 2 Hydroxyl-Gruppen (-OH) pro Molekül aufweisen. Das mindestens eine Polyol kann beispielsweise 2 oder mehr Hydroxylgruppen aufweisen, wie 3, 4, 5, 6, 7, 8, 9, 10 oder mehr und eine cyclische, lineare oder verzweigte Struktur haben. Die Polyole nach der Erfindung können alle im Stand der Technik bekannten und erfindungsgemäß geeigneten Polyole sein, insbesondere die aus der Polyurethan-Technologie bekannten Polyole mit einem zahlenmittleren Molekulargewicht bis zu 10.000 g/mol. In verschiedenen Ausführungsformen kann das Polyol eine zahlenmittleres Molekulargewicht von 100 bis 10.000 g/mol aufweisen, wie beispielsweise von 120 bis 6.000 g/mol, von 120 bis 4.000 g/mol von 120 bis 2.000 g/mol, von 120 g/mol bis 1.000 g/mol, von 200 g/mol bis 6.000 g/mol, von 200 g/mol bis 4.000 g/mol, von 200 g/mol bis 2.000 g/mol, von 200 g/mol bis 1.000 g/mol. Sie können beispielsweise auf Basis von Polyethern, Polyestern, Polyolefinen, Polyacrylaten oder Polyamiden ausgewählt werden, wobei diese Polymere jeweils mindestens 2 OH-Gruppen aufweisen müssen.

Die im vorliegenden Text angegebenen Molekulargewichte beziehen sich, soweit nicht anders angegeben, auf das Zahlenmittel des Molekulargewichts (Mₙ). Das zahlenmittlere Molekulargewicht kann mittels Gelpermeationschromatographie gemäß DIN 55672-1:2007-08 mit Polystyrol als Standard und THF als Eluent bestimmt werden. Wenn nicht anders angegeben, sind alle angegebenen Molekulargewichte solche, die mittels GPC bestimmt wurden.

Die Polyole werden insbesondere derart ausgewählt, dass sich die für das Hybridharz gewünschte Endviskosität ergibt, hierfür sind insbesondere Triole geeignet.

Geeignete Polyetherpolyole sind beispielsweise lineare oder verzweigte Polyether, die eine Mehrzahl von Etherbindungen aufweisen und die zumindest zwei Alkoholgruppen enthalten, vorzugsweise an den Kettenenden. Sie enthalten im Wesentlichen keine anderen funktionellen Gruppen als die OH-Gruppen. Solche Polyetherpolyole entstehen als Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, wie 1,2-Butandiol, 1,3-Butandiol, 1,4-Butandiol und 2,3-Butandiol, Pentandiolen und Hexandiolen, 2,2-Dimethyl-1,3-propandiol, 2-Methylpropandiol, Polyglycerol, 1,6-Hexandiol, 2,4,4-Trimethylhexandiol-1,6, 2,2,4-Trimethylhexandiol-1,6, 1,4-Cyclohexandimethanol, oder aromatischen Diolen, wie 4,4'-Dihydroxy-diphenylpropan, Bisphenol A, Bisphenol F, Brenzkatechin, Resorcin, Hydrochinon oder Gemischen aus zwei oder mehr davon. Weitere, im Rahmen der Erfindung geeignete Polyole entstehen durch Polymerisation von Tetrahydrofuran (Poly-THF). Ferner sind auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet. Sie weisen dieselbe Anzahl endständiger OH-Gruppen auf wie der Ausgangsalkohol.

Anstelle der oder zusammen mit den Polyetherpolyolen können auch Polyesterpolyole eingesetzt werden. Diese entstehen durch eine Polykondensationsreaktion eines mehrwertigen Alkohols mit beispielsweise 2 bis 15 C-Atomen und vorzugsweise 2 oder 3 OH-Gruppen mit einer oder mehreren Polycarbonsäuren, vorzugsweise solchen mit 2 bis 14 C-Atomen (einschließlich der C-Atome der Carboxylgruppen) und mit 2 bis 6 Carboxylgruppen. Dabei sind Dicarbonsäuren bevorzugt, die zusammen mit Diolen zu linearen Polyesterdiolen oder mit Triolen zu verzweigten Polyestertriolen führen. Umgekehrt lassen sich verzweigte Polyestertriole auch durch Umsetzung eines Diols mit einer Tricarbonsäure erhalten. Als Alkoholkomponente des Polyesterpolyols können beispielsweise verwendet werden: Ethylenglykol, 1,2-Propandiol, 1,3-Propandiol, die isomeren Butandiole, Pentandiole, Hexandiole, 2,2-Dimethyl-1,3-propandiol, 2-Methylpropandiol, 1,6-Hexandiol, 2,4,4-Trimethylhexandiol-1,6, 2,2,4-Trimethylhexandiol-1,6, Cyclohexandiol-1,4, 1,4-Cyclohexandimethanol, oder aromatische Diole, wie 4,4'-Dihydroxy-diphenylpropan, Bisphenol A, Bisphenol F, Brenzkatechin, Resorcin, Hydrochinon. Geeignete Carbonsäuren sind beispielsweise: Phthalsäure, Isophthalsäure, Terephthalsäure, Maleinsäure, Dodecylmaleinsäure, Octadecenylmaleinsäure, Fumarsäure, Akonitsäure, 1,2,4-Benzoltricarbonsäure, 1,2,3-Propantricarbonsäure, Malonsäure, Bernsteinsäure, Glutarsäure, Adipinsäure, Pimelinsäure, Sebacinsäure, Cyclohexan-1,2-Dicarbonsäure, 1,4- Cyclohexadien-1,2-dicarbonsäure und weitere. Anstelle der Carbonsäuren können auch deren Anhydride eingesetzt werden.

Wegen des für die erfindungsgemäße Anwendung besonders geeigneten Vernetzungsverhaltens ist es bevorzugt, Diisocyanate in Kombination mit trifunktionellen Polyolen (Triol) und/oder aliphatischen Diolen einzusetzen. In einer bevorzugten Ausführungsform der vorliegenden Erfindung hat es sich als vorteilhaft erwiesen, wenn das mindestens eine Polyol eine Polyetherstruktur aufweist. Dies sind beispielsweise die entsprechenden Derivate von Polyethylenglykol, Polypropylenglykol und/oder Polytetrahydrofuran. Vorzugsweise ist das erfindungsgemäße Polyol ausgewählt aus der Gruppe bestehend aus Polyethylenglykol, Polypropylenglykol, Polytetramethylenglykol, Polyhexamethylenglykol und Mischungen davon. Besonders bevorzugt ist das Polyol ausgewählt aus der Gruppe bestehend aus Polyethylenglykol, Polypropylenglykol oder Mischungen davon und noch bevorzugter ist das Polyol Propylenglykol. Weiter bevorzugt sind Mischungen von trifunktionellen Polyolen, insbesondere trifunktionellen Polyetherpolyolen, und den vorgenannten (linearen) Polyetherpolyolen, wie insbesondere Polyethylenglykol und Polypropylenglykol, ganz besonders Polypropylenglykol.

Weiterhin hat es sich als vorteilhaft erwiesen, wenn das mindestens eine Polyol, insbesondere das mindestens eine Triol, besonders bevorzugt das mindestens eine Triol und das mindestens eine Diol, ein Molekulargewicht (Mn) von weniger als 10000g/mol, vorzugsweise von 120 bis 6000g/mol, insbesondere 150 bis 3000 g/mol, ganz besonders bevorzugt 180 bis 1000 g/mol aufweist. Besonders bevorzugt ist ein Polyethertriol mit einem mittleren Molekulargewicht von 200 bis 500 g/mol enthalten und/oder besonders bevorzugt ist ein Polypropylenglykol (Diol) mit einem mittleren Molekulargewicht von 150 bis 2100 g/mol, insbesondere 180 bis 500 g/mol enthalten.

Das mindestens eine Polyisocyanat und das mindestens eine Polyol werden erfindungsgemäß zu einem Polyurethan umgesetzt. Dabei werden die Polyisocyanate bzw. die Polyole in Mengen eingesetzt, dass das Verhältnis von Isocyanat-Äquivalenzgewicht zu Hydroxy-Äquivalenzgewicht erfindungsgemäß vorzugsweise im Bereich von 1:1,5 bis 1,5:1, noch bevorzugter 1,2:1 bis 1:1,2, am bevorzugtesten bei etwa 1:1 liegt. Bevorzugt werden die Polyisocyanate bzw. die Polyole in Mengen eingesetzt, so dass kein Überschuss an Isocyanat-Gruppen vorliegt. Dies könnte zu Blasenbildung führen.

Der Gewichtsanteil des mindestens einen Polyols bezogen auf die Gesamtmasse der eingesetzten Epoxid/Isocyanat/Polyol-Bestandteile beträgt üblicherweise von 5,0 bis 50,0 Gew.-%, vorzugsweise 10 bis 35 Gew.-%. Dies kann von dem mindestens einem Polyol und dessen chemischen und physikalischen Eigenschaften sowie von den gewünschten physikalischen und chemischen Eigenschaften der gehärteten Zusammensetzung abhängen. In einer bevorzugten Ausführungsform enthält das Hybridharzsystem bezogen auf das Gesamtgewicht 2,0 bis 30,0 Gew.-%, bevorzugter 5,0 bis 20,0 Gew.-% Polyol.

Die Gewichtsanteile des mindestens einen Epoxidharzes und des mindestens einen Polyisocyanats können ebenfalls variiert werden und hängt von den jeweils verwendeten Verbindungen und deren chemischen und physikalischen Eigenschaften sowie von den gewünschten physikalischen und chemischen Eigenschaften der gehärteten Zusammensetzung ab. Generell wird das Epoxid bezogen auf die Gesamtmasse der der eingesetzten Epoxid/Isocyanat/Polyol-Bestandteile im Mengen von 20 bis 70 Gew.-%, bevorzugter 35 bis 55 Gew.-% eingesetzt. In einer bevorzugten Ausführungsform enthält das Hybridharzsystem bezogen auf die Gesamtmasse 10,0 bis 40,0 Gew.-%, bevorzugter 15,0 bis 30,0 Gew.-% Epoxid.

Das mindestens eine Polyisocyanat wird vorzugsweise in Mengen eingesetzt, die sich gemäß der oben angegebenen Molverhältnisse von Isocyanat- zu Hydroxylgruppen ergeben. Generell wird das Polyisocyanat bezogen auf die Gesamtmasse der der eingesetzten Epoxid/Isocyanat/Polyol-Bestandteile im Mengen von 10 bis 50 Gew.-%, bevorzugter 15 bis 40 Gew.-% eingesetzt. In einer bevorzugten Ausführungsform enthält das Hybridharzsystem bezogen auf die Gesamtmasse 5,0 bis 30,0 Gew.-%, bevorzugter 8,0 bis 20,0 Gew.-% Epoxid.

Weiterhin ist es erfindungswesentlich, dass das Hybridharzsystem einen latenten Härter für Epoxidpräpolymere bzw. Epoxidharze enthält. Unter einem latenten (oder auch thermisch aktivierbaren) Härter werden erfindungsgemäß Verbindungen verstanden, die bei 22°C gemeinsam mit den Epoxidpräpolymeren gelagert werden können, ohne dass die Härtungsreaktion in nennenswertem Umfang einsetzt. Erst oberhalb von 80°C, vorzugsweise oberhalb von 100°C verändert sich die molekulare Struktur oder der Aggregatzustand der latenten Härter, so dass derartige Verbindungen oberhalb dieser Temperatur als Härter wirken und die Polymerisationsreaktion der Epoxidpräpolymere starten und/oder beschleunigen. Es ist erfindungsgemäß bevorzugt, dass die latenten Härter derart gewählt werden, dass sie erst bei den Temperaturen, die beim Pressen der Harzmassen angewandt werden, aktiviert werden, d.h. bei Temperaturen über 120°C. Dies stellt sicher, dass die Härter nicht schon bereits im Zuge der exothermen Polyurethanbildung aktiviert werden.

Die latenten Härter können beispielsweise ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethylethoxymethylbenzoguanamin genannt. Weiterhin können 3,3-Diaminodiphenylsulfon und 4,4- Diaminodiphenylsulfon sowie deren Derivate oder Ionische Flüssigkeiten (Imidazolium Salze), wie etwa Baxxodur® ECX-2450 als latente Härter verwendet werden. Weiterhin sind die unter den Handelsbezeichungen Ancamine® 2014, Ancamine® 2337, Adeka® EH-4357 und Adeka® EH-4360 erfindungsgemäß bevorzugt. Auch mikroverkapselte Systeme, wie sie unter der Handelsbezeichnung Novacure® von der Firma Asahi Denka vertrieben werden, sind erfindungsgemäß bevorzugt.

Weiterhin sind phenolische Härter, wie sie beispielsweise von der Firma Hexion unter der Handelsbezeichnung Durite® (insbesondere Durite®SD 1713 und Durite® SC-1008) vertrieben werden, erfindungsgemäß geeignet.

Eine weitere Gruppe bevorzugter Härter bilden die Imidazole, die Anhydride sowie deren gemeinsame Addukte. Bevorzugte Imidazole sind erfindungsgemäß die am N-Atom unsubstituierten Imidazole, wie beispielsweise 2-Phenyl-4-methylimidazol, 2-Phenylimidazol und Imidazol. Weitere erfindungsgemäß bevorzugte Imidazolkomponenten sind die Alkyl-substituierten Imidazole, N-substituierten Imidazole sowie deren Mischungen.

Erfindungsgemäß bevorzugte Anhydride sind die cycloaliphatischen Anhydride, wie beispielsweise Pyromellithsäuredianhydrid, kommerziell erhältlich als PMDA von der Firma Aldrich. Weitere bevorzugte Anhydride sind Methylhexahydrophthalsäureanhydrid (kommerziell erhältlich als MHHPA von der Firma Lonza Inc. Intermediates and Actives), Methyltetrahydrophthalsäureanhydrid, Nadicmethylanhydrid, Hexahydrophthalsäureanhydrid, Tetrahydrophthalsäureanhydrid, Phthalsäureanhydrid, Dodecylbernsteinsäureanhydrid, Bisphenyldianhydride, Benzophenontetracarboxylsäuredianhydride sowie deren Mischungen.

Besonders bevorzugte Imidazol-Anhydrid-Addukte sind ein Komplex aus 1 Teil 1,2,4,5-Benzentetracarboxylsäureanhydrid und 4 Teilen 2-Phenyl-4-methylimidazol, sowie ein Komplex aus 1 Teil 1,2,4,5-Benzenetetracarboxylsäuredianhydrid und 2 Teilen 2-Phenyl-4-methylimidazol. Die Addukte werden durch Lösung der Komponenten in einem geeigneten Lösemittel, wie beispielsweise Aceton, unter Einwirkung von Hitze erhalten. Nach der Abkühlung fällt das Produkt aus der Lösung aus.

Nadicmethylanhydrid (Methyl-5-norbornen-2,3-dicarbonsäureanhydrid) ist ein bevorzugter anhydridischer Härter.

Weiterhin bevorzugt können auch Epoxy-Amin-Addukte als latente Härter eingesetzt, wie sie beispielsweise unter der Handelsbezeichnung Ajicure® erhältlich sind.

Die latenten Härter sind erfindungsgemäß vorzugsweise in einer Menge von 0,5 bis 10 Gew.-%, insbesondere von 1 bis 5 Gew.-%, jeweils bezogen auf die resultierende Anwendungszubereitung, d.h. das Hybridharzsystem, enthalten.

Zusätzlich zu den vorgenannten Härtern können erfindungsgemäß katalytisch wirksame substituierte Harnstoffe als Beschleuniger eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Diese können auch bevorzugt in einer Polymermatrix, wie einem Phenolharz, vorliegen.

Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C1 bis C12-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2- Dimethylaminoethanol, N-substituierte Piperazine, N-substituierte Homopiperazine, N-substituierte Aminophenole an Di- oder Polyglycidylether des Bisphenols A oder F oder des Resorcins.

Im Rahmen der vorliegenden Erfindung ist es bevorzugt, aber nicht zwingend erforderlich, dass das Hybridharzsystem zusätzlich einen derartigen Härtungsbeschleuniger für Epoxid-Präpolymere enthält, insbesondere Addukte von Aminoverbindungen an Epoxidharze oder Derivate des Harnstoffs, wie beispielsweise Fenuron.

Die Härtungsbeschleuniger für Epoxidpräpolymere sind erfindungsgemäß vorzugsweise in einer Menge von 0,01 bis 1 Gew.-%, insbesondere von 0,05 bis 0,5 Gew.-%, jeweils bezogen auf die resultierende Hybridharzzusammensetzung enthalten.

Schließlich enthält das Hybridharzsystem zur Beschleunigung der Polyurethanbildung zusätzlich einen Härtungskatalysator für Isocyanate. Beispielsweise sind hierfür Dialkylzinn-Dicarboxylate geeignet, wie beispielsweise Dibutylzinn-Dicarboxylate. Die Carboxylat-Gruppen können ausgewählt werden aus solchen mit insgesamt (also einschließlich der Carboxylgruppe) 2 bis 18 C-Atomen. Als Carbonsäuren zur Bildung der Carboxylate geeignet sind beispielsweise Essigsäure, Propionsäure, Buttersäure, Valeriansäure, Capronsäure, Caprylsäure, Caprinsäure, Laurinsäure, Palmitinsäure und Stearinsäure. Insbesondere ist Dibutylzinn-Dilaurat geeignet. Des Weiteren können metallorganische Verbindungen auf Basis Bismuth und Zink wie z. B. Bismuth-Zink-Neodecanoat verwendet werden. Weiterhin kann es bevorzugt sein, Härtungskatalysatoren für Isocyanate zu verwenden, deren Aktivität gegenüber dem freien Katalysator retardiert ist, das heißt deren Aktivität beispielsweise durch Wärmeeinwirkung stark zunimmt. Ein Beispiel für derartige Härtungskatalysatoren sind thermisch dekomplexierende Metallchelate. Eine Ausführungsform ist zum Beispiel, das mit Pentan-2,4-dion versetzte Zirkonchelat K-Kat A209 der Firma King Industries.

Derartige Härtungskatalysatoren für Isocyanate sind erfindungsgemäß vorzugsweise in einer Menge von 0 bis 3 Gew.-%, insbesondere von 0,02-0,5 Gew.-%, jeweils bezogen auf die resultierende Anwendungszubereitung, enthalten.

Die Urethanreaktion erfolgt durch Mischen der Polyol- und Isocyanatkomponenten sowie des Katalysators in Gegenwart des mindestens einen Epoxidharzes, um das entsprechende Epoxid/Polyurethan-Hybridharz zu erhalten. Geeignete Mischer und Verfahren sind im Stand der Technik bekannt. Des Weiteren können auch die weitere Bestandteile der Hybridharzzusammensetzungen enthalten sein, beispielsweise der latente Härter für das Epoxid sowie ggf. Füllstoffe und/oder andere Hilfsstoffe. Wenn der latente Härter enthalten ist, ist es entscheidend, dass die Temperatur der Zusammensetzung während der Urethanreaktion nicht auf eine Temperatur steigt, die den latenten Härter aktiviert.

In verschiedenen Ausführungsformen umfasst das Harzsystem neben dem Epoxid, dem Polyurethan, und dem latenten Härter zusätzliche Bestandteile, wie sie im Stand der Technik als solche bekannt und üblich sind.

In einer bevorzugten Ausführungsform enthält das Hybridharz beispielsweise mindestens einen Schlagzähigkeits-Verbesserer (englisch: "toughener"). Derartige Schlagzähigkeits-Verbesserer verbessern das Bruchverhalten der aus den erfindungsgemäßen Harzsystemem erhältlichen Faserverbundwerkstoffe und sind dem Fachmann auf dem Gebiet der Epoxid-Klebstoffe bekannt. Beispielsweise können sie ausgewählt sein aus: thermoplastischen Isocyanaten oder Polyurethanen, Kautschuk-Partikeln, insbesondere solchen mit Kern-Schale-Struktur, und BlockCopolymeren, insbesondere solchen, die einen ersten Polymerblock mit einer Glasübergangstemperatur von unterhalb 15 °C und einen zweiten Polymerblock mit einer Glasübergangstemperatur von oberhalb 25 °C enthalten. Derartige Block-Copolymere sind vorzugsweise ausgewählt aus solchen, bei denen ein erster Polymerblock ausgewählt ist aus einem Polybutadien oder Polyisoprenblock und ein zweiter Polymerblock ausgewählt ist aus einem Polystyrol oder einem Polymethylmethacrylat-Block. Spezielle Beispiele hierfür sind Block-Copolymere mit folgendem Blockaufbau: Styrol-Butadien-(Meth)Acrylat, Styrol-Butadien-(Meth)Acrylsäureester, Ethylen-(Meth)AcrylsäureesterGlycidyl(meth)acrylsäureester, Ethylen-(Meth)Acrylsäureester-Maleinsäureanhydrid, MethylmethacrylatButylacrylat-Methylmethacrylat.

Erfindungsgemäß bevorzugte "toughener" sind weiterhin Kautschuk-Partikel mit Kern-Schale-Struktur, die einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen.

Besonders geeignete Kautschuk-Partikel mit Kern-Schale-Struktur können einen Kern aus einem Dien Homopolymer, einem Dien-Copolymer oder einem Polysiloxan-Elastomer und/oder eine Schale aus einem Alkyl(meth)acrylat-Homopolymer oder -Copolymer aufweisen.

Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere, (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen.

Das Polymer oder Copolymer der Schale kann Säuregruppen aufweisen, die durch Metallcarboxylat-Bildung vernetzen können, beispielsweise durch Salzbildung mit zweiwertigen Metallkationen. Weiterhin kann das Polymer oder Copolymer der Schale kovalent vernetzt sein, indem man Monomere einsetzt, die zwei oder mehr Doppelbindungen pro Molekül aufweisen.

Als Kern können andere kautschukartige Polymere verwendet werden, wie beispielsweise Polybutylacrylat oder Polysiloxanelastomere, wie beispielsweise Polydimethylsiloxan, insbesondere vernetztes Polydimethylsiloxan.

Typischerweise sind diese Kern-Schale-Partikel so aufgebaut, dass der Kern 50 bis 95 Gew.-% des Kern-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kern-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen.

Die Herstellung derartiger Kern-Schale-Partikel ist im Stand der Technik bekannt, wie beispielsweise in WO 2007/025007 auf Seite 6, Zeilen 16 bis 21 angegeben ist. Kommerzielle Bezugsquellen derartiger KernSchale-Partikel werden in diesem Dokument im letzten Absatz der Seite 6 bis zum ersten Absatz der Seite 7 aufgeführt. Auf diese Bezugsquellen wird hiermit verwiesen. Weiterhin wird auf Herstellverfahren für solche Partikel verwiesen, die in dem genannten Dokument von Seite 7, 2. Absatz bis Seite 8, 1 . Absatz beschrieben sind. Für nähere Informationen zu geeigneten Kern-Schale-Partikel wird ebenfalls auf das genannte Dokument WO 2007/025007 verwiesen, das von Seite 8, Zeilen 15 bis Seite 13, Zeile 15 ausführliche Informationen hierzu enthält.

Dieselbe Funktion wie die vorstehend genannten Kautschuk-Partikel mit Kern-Schale-Struktur können anorganische Partikel übernehmen, die eine Hülle aus organischen Polymeren aufweisen.

In solchen Ausführungsform enthält das erfindungsgemäß eingesetzte Harzsystem vorzugsweise anorganische Partikel, die eine Hülle aus organischen Polymeren aufweisen, wobei die organischen Polymere ausgewählt sind aus Homo- oder Copolymeren von Acrylsäureund/oder Methacrylsäureester und zu mindestens 30 Gew.-% aus einpolymersiertem Acrylsäureund/oder Methacrylsäureester bestehen. Zur genaueren Beschreibung der anorganischen Partikel sei an dieser Stelle auf die WO 2012/139975 A1, Seiten 20-22 verwiesen.

Die Schlagzähigkeits-Verbesserer sind vorzugsweise in einer Menge von 0 bis 50 Gew.-%, insbesondere von 5 bis 20 Gew.-%, jeweils bezogen auf die resultierende Anwendungszubereitung, enthalten.

In verschiedenen Ausführungsformen der vorliegenden Erfindung kann es bevorzugt sein, wenn die resultierende Anwendungszubereitung, d.h. das einsatzbereite Harzsystem, mindestens einen Füllstoff enthält.

In der Regel sind die bekannten Füllstoffe wie zum Beispiel die diversen gemahlenen oder gefällten Kreiden, Ruß, Calcium-Magnesiumcarbonate, Talkum, Kaoline, Schwerspat sowie insbesondere silikatische Füllstoffe vom Typ des Aluminium-Magnesium-Calcium-Silicats, z. B. Wollastonit, Bentonite, Chlorit erfindungsgemäß bevorzugt.

Zur Gewichtsreduzierung kann das Harzsystem zusätzlich zu den vorgenannten "normalen" Füllstoffen so genannte Leichtfüllstoffe enthalten. Leichtfüllstoffe zeichnen sich erfindungsgemäß dadurch aus, dass sie eine geringere Dichte aufweisen als die Zubereitung in die sie eingearbeitet werden, und somit deren Zugabe die Dichte der Zubereitung reduziert. Derartige Leichtfüllstoffe können ausgewählt werden aus der Gruppe der Metallhohlkugeln wie z. B. Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten. Weiterhin kommen Kohlenstoffnanoröhrchen als geeignete Füllstoffe in Frage.

Die Füllstoffe (normale Füllstoffe und Leichtfüllstoffe gemeinsam) sind in den resultierenden Anwendungszubereitungen vorzugsweise in Mengen von 0 bis 70 Gew.-%, insbesondere von 10 bis 60 Gew.-%, jeweils bezogen auf die resultierende Anwendungszubereitung, enthalten.

Es kann dabei vorteilhaft sein, dass die Füllstoffe eine mittlere Teilchengröße kleiner 150nm aufweisen.

Weiterhin können die erfindungsgemäß eingesetzten Harzsysteme gegebenenfalls gängige weitere Hilfs- und Zusatzmittel wie beispielsweise Weichmacher, Rheologie-Hilfsmittel, interne Trennmittel, Netzmittel, Haftvermittler, Alterungsschutzmittel, Stabilisatoren und/oder Farbpigmente enthalten. Je nach Anforderungsprofil in Bezug auf Verarbeitungseigenschaften, die Flexibilität, die geforderte Versteifungswirkung sowie den klebenden Verbund zu den Substraten können die Mengenverhältnisse der Einzelkomponenten in verhältnismäßig weiten Grenzen variieren.

Die hierin beschriebenen Harzsysteme sind insbesondere als Matrixharze für den Einsatz in SMCs geeignet. Dazu können die Hybridharze, wie sie vorstehend beschrieben wurden, als Pressmasse eingesetzt und als solche mit den Fasern verpresst werden. In bekannten SMC Verfahren werden die Harzmassen beispielsweise in Form von Pasten oder teigartigen Massen sowie die Fasern auf eine Trägerfolie aufgebracht, wonach dann das Verpressen erfolgt. Das Aufbringen der Fasern kann dabei beispielsweise zwischen zwei Schichten der Harzmasse erfolgen. Dieser Verbund wird mit einer weiteren Trägerfolie abgedeckt und dann mit Kompaktierungswalzen verpresst. Das Verpressen erfolgt bei einer Temperatur von 130 bis 170°C, üblicherweise 150 bis 160°C. Diese Temperatur reicht aus, um den latenten Härter zu aktivieren und damit das Epoxidharz vollständig auszuhärten.

Ein Gegenstand der Erfindung ist ein Verfahren zur Herstellung von Faserverbundwerkstoffen, insbesondere mittels SMC-Verfahren, dadurch gekennzeichnet, dass ein Hybridharzsystem umfassend:
(1) mindestens ein Epoxidharz,
(2) mindestens ein Polyurethan; wobei das mindestens eine Polyurethan erhältlich ist durch das Umsetzen einer Reaktionsmischung enthaltend:
   (a) mindestens ein Polyisocyanat;
   (b) mindestens ein Polyol; und
   (c) mindestens ein Katalysator für die Polyurethansynthese; und
(3) mindestens einen latenten Härter für das Epoxidharz;
mit einem geeigneten Fasermaterial bei erhöhter Temperatur verpresst und dadurch ausgehärtet wird, wobei das Hybridharzsystem insbesondere bei einer Temperatur von 150°C eine Viskosität von mindestens 100 Pas, vorzugsweise mindestens 500 Pas aufweist und vorteilhafterweise die weiteren obengenannten bevorzugten Ausführungsformen umfasst.

Als Faserbestandteile der Faserverbundwerkstoffe sind bekannte hochfeste Faserwerkstoffe geeignet. Diese können beispielsweise aus Glasfasern; synthetischen Fasern, wie Polyesterfasern, Polyethylenfasern, Polypropylenfasern, Polyamidfasern, Polyimidfasern oder Aramidfasern; Kohlenstofffasern; Borfasern; oxidischen oder nicht oxidischen Keramikfasern, wie Aluminiumoxid/Siliciumdioxidfasern, Siliciumcarbidfasern; Metallfasern, beispielsweise aus Stahl oder Aluminium; oder aus Naturfasern, wie Flachs, Hanf oder Jute bestehen. Diese Fasern können in Form von Matten, Geweben, Gewirken, Gelegen, Vliesen oder Rovings eingebracht werden. Es können auch zwei oder mehr dieser Fasermaterialien als Gemisch verwendet werden. Es können Kurzschnittfasern ausgewählt werden, bevorzugt werden jedoch synthetische Langfasern eingesetzt, insbesondere Gewebe und Gelege. Solche hochfesten Fasern, Gelege, Gewebe und Rovings sind dem Fachmann bekannt.

Die Fasern werden erfindungsgemäß bevorzugt in einer derartigen Menge vorgelegt, dass ihr Volumenanteil im fertig gestellten Faserverbundwerkstoff 30 bis 75 Vol.-% beträgt. Insbesondere soll der Faserverbundwerkstoff Fasern in einem Volumenanteil von mehr als 40 Vol.-%, bevorzugt mehr als 50 Vol.-%, insbesondere bevorzugt zwischen 50 und 70 Vol.-% bezogen auf den gesamten Faserverbundwerkstoff enthalten, um besonders gute mechanische Eigenschaften zu erzielen. Im Falle von Kohlefasern wird der Volumenanteil gemäß der Norm DIN EN 2564:1998-08 bestimmt, im Falle von Glasfasern gemäß der Norm DIN EN ISO 1172:1998-12.

Die Erfindung betrifft neben der Verwendung der hierin beschriebenen Harzsysteme als Matrixharz zur Herstellung von SMCs bzw. in SMC Anwendungen auch SMC Verfahren, in denen die hierin beschriebenen Hybridharzsysteme eingesetzt werden. In diesen Verfahren zur Herstellung von Faser-Matrix-Verbundstoffen werden die hierin beschriebenen Harzmassen mit geeigneten Fasern unter erhöhter Temperatur verpresst und dabei ausgehärtet.

Ein weiterer Gegenstand der vorliegenden Erfindung sind die gehärteten Faserverbundwerkstoffe erhältlich durch die vorstehend beschriebenen Verfahren sowie Bau- oder Formteile, die einen solchen erfindungsgemäßen Faserverbundwerkstoff enthalten. Aufgrund der großen Bandbreite an Verarbeitungsmöglichkeiten können die erfindungsgemäßen Faserverbundwerkstoffe in einer Vielzahl von Bauteilen verarbeitet werden. Ein solcher Faserverbundwerkstoff eignet sich insbesondere als Automobilbauteil. Solche Faserverbundwerkstoffe weisen gegenüber Stahl mehrere Vorteile auf, so sind sie leichter, zeichnen sich durch eine verbesserte Crash-Resistenz aus und sind außerdem langlebiger.

Ein weiterer Gegenstand der vorliegenden Erfindung sind vorgehärtete Faserverbundwerkstoffe erhältlich durch die vorstehend beschriebenen Verfahren, wobei die Aushärtung nicht vollständig erfolgt. Ein solcher vorgehärteter Faserverbundwerkstoff basierend auf den erfindungsgemäßen Hybridmatrixsystem ist besonders lagerstabil, auch bei Raumtemperatur und kann erst nach mehreren Wochen in seiner final gewünschten Form ausgehärtet bzw. gepresst werden, um die gewünschten Materialeigenschaften insbesondere für den Automobilbereich zu erhalten.

Es ist im Übrigen selbstverständlich, dass alle Ausführungsformen, die oben im Zusammenhang mit den erfindungsgemäßen Harzsystemen offenbart wurden, auch genauso in den beschriebenen Verfahren und Verwendungen sowie den gehärteten Verbundwerkstoffen und Bauteilen anwendbar sind und umgekehrt.

### Beispiele

Zunächst wurden alle bei Raumtemperatur flüssigen Rohstoffe aus Tabelle 1 im Speedmixer für 2 min bei 2000 Umdrehungen pro Minute im Vakuum gemischt. In einem zweiten Schritt wurden Füllstoffe und weitere fest Bestandstandsteile ebenso eingemischt. Nachdem das Gemisch wieder auf Raumtemperatur abgekühlt war, wurde der Katalysator für die Polyurethan Reaktion für 1 min bei 2000 Umdrehungen pro Minute unter Vakuum eingemischt. Anschließend wurden die Gemische für 1h bei 80°C im Umluftofen vorgehärtet. Nach dieser Vorhärtung wurde die temperaturabhängige Viskosität des Hybridharzsystems mittels eines Platte/Platte Rheometers bei einer Heizrate von 10 K/s im Bereich von 20 bis 200°C in Oszillation mit 100 rad/s bei einer Deformation von 1% bestimmt.

**Tabelle 1**

| | 1 | 2 | 3 | 4 | 5 |
|---|---|---|---|---|---|
| DER 331 (Epoxidharz-Präpolymer) | 21,31 | 22,83 | 21,97 | 26,74 | 26,74 |
| PEG 200 | - | - | - | 5,00 | 3,00 |
| PPG2000 | 4,90 | 12,81 | 12,32 | - | - |
| Trifunktionelles Polyetherpolyol (Mn ∼ 300g/mol | 8,73 | 4,27 | 4,93 | 5,00 | 3,00 |
| MDI/PMDI von Desmodur | 14,37 | 9,20 | 9,92 | 15,32 | 10,12 |
| Füllstoff (Omyacarb 4HD) | 49,00 | 49,10 | 49,13 | 54,10 | 44,90 |
| DBTL (Dibutylzinndilaurat) | 0,1 | 0,09 | 0,08 | 0,11 | 0,09 |
| Dyhard 100SH (Dicyandiamid) | 1,49 | 1,60 | 1,54 | 1,87 | 1,87 |
| Dyhard UR300 (Fenuron) | 0,11 | 0,11 | 0,11 | 0,13 | 0,13 |
| Viskosität bei RT | OK | OK | OK | OK | OK |
| Viskosität bei 150°C | OK | OK | OK | OK | OK |

| | | | | | |
|---|---|---|---|---|---|
| MDI: Methylendiphenylisocyanat PMDI: polymeres Methylendiphenylisocyanat PEG: Polyethylenglykol PPG: Polypropylenglykol DER 331: Epoxidharz (Diglycidylether von Bisphenol A), Dow Chemical | | | | | |

Die Hybridharzsysteme der Beispiele 1 bis 5 zeigten sowohl bei RT als auch bei 150 °C hervorragende Viskositätseigenschaften, die besonders für SMC geeignet sind. Die Hybridharzsysteme der Beispiele 4 und 5 zeigten besonders vorteilhafte Materialeigenschaften bei den gehärteten Faserverbundwerkstoffen.

## Patentansprüche

1. Härtbares Epoxid/Polyurethan Hybridharzsystem für SMC (sheet moulding compound), **dadurch gekennzeichnet, dass** das Hybridharzystem umfasst:
(1) mindestens ein Epoxidharz,
(2) mindestens ein Polyurethan; wobei das mindestens eine Polyurethan erhältlich ist durch das Umsetzen einer Reaktionsmischung enthaltend:
(a) mindestens ein Polyisocyanat;
(b) mindestens ein Polyol; und
(c) mindestens ein Katalysator für die Polyurethansynthese; und
(3) mindestens einen latenten Härter für das Epoxidharz;
wobei das Hybridharzsystem bei einer Temperatur von 150°C eine Viskosität von mindestens 100 Pas, vorzugsweise mindestens 500 Pas aufweist.

2. Hybridharzsystem nach Anspruch 1, **dadurch gekennzeichnet, dass** das mindestens eine Epoxidharz ein Präpolymer auf Basis mindestens eines Glycidylethers, insbesondere eines aromatischen Diglycidylethers, besonders bevorzugt eines Bisphenol Diglycidylethers ist.

3. Hybridharzsystem nach Anspruch 1 oder 2, **dadurch gekennzeichnet, dass** das mindestens eine Polyisocyanat ein aromatisches Polyisocyanat, insbesondere Methylendiphenyldiisocyanat (MDI) oder polymeres Methylendiphenyldiisocyanat (PMDI) ist.

4. Hybridharzsystem nach einem der Ansprüche 1 bis 3, **dadurch gekennzeichnet, dass** das mindestens eine Polyol ausgewählt ist aus der Gruppe bestehend aus Polyetherpolyol, Polyesterpolyol und Mischungen davon und/oder mindestens ein Triol als Polyol enthalten ist.

5. Hybridharzsystem nach Anspruch 4, **dadurch gekennzeichnet, dass** das mindestens eine Polyol
(a) ausgewählt ist aus der Gruppe bestehend aus Polyethylenglykol, Polypropylenglykol, Polytetramethylenglykol, Polyhexamethylenglykol und Mischungen davon, vorzugsweise aus der Gruppe bestehend aus Polyethylenglykol, Polypropylenglykol und Mischungen davon und noch bevorzugter Propylenglykol ist; und/oder
(b) ein zahlenmittleres Molekulargewicht Mₙ von weniger als 10.000 g/mol, vorzugsweise von 120 bis 6000g/mol, insbesondere 150 bis 3000 g/mol, ganz besonders bevorzugt 180 bis 1000 g/mol aufweist; und/oder
(c) mindestens ein lineares Polyetherpolyol, insbesondere Polyethylenglykol oder Polypropylenglykol, und mindestens ein trifunktionelles Polyol, insbesondere trifunktionelles Polyetherpolyol, umfasst.

6. Hybridharzsystem nach einem der Ansprüche 1 bis 5, **dadurch gekennzeichnet, dass**
(a) der latente Härter sie erst bei den Temperaturen über 120°C aktiviert wird; und/oder
(b) der Katalysator für die Polyurethansynthese eine Organozinnverbindung ist, insbesondere Dibutylzinndilaurat (DBTL).

7. Verwendung des Hybridharzsystems nach einem der Ansprüche 1 bis 6 als Matrixharz in SMCs.

8. Verfahren zur Herstellung von Faserverbundwerkstoffen mittels SMC-Verfahren, **dadurch gekennzeichnet, dass** ein Hybridharzsystem umfassend:
(3) mindestens ein Epoxidharz,
(4) mindestens ein Polyurethan; wobei das mindestens eine Polyurethan erhältlich ist durch das Umsetzen einer Reaktionsmischung enthaltend:
(d) mindestens ein Polyisocyanat;
(e) mindestens ein Polyol; und
(f) mindestens ein Katalysator für die Polyurethansynthese; und
(3) mindestens einen latenten Härter für das Epoxidharz;
mit einem geeigneten Fasermaterial bei erhöhter Temperatur verpresst und dadurch ausgehärtet wird.

9. Faserverbundwerkstoff erhältlich gemäß dem Verfahren nach Anspruch 8.

10. Bau- oder Formteil enthaltend den Faserverbundwerkstoff gemäß Anspruch 9.
